# EUROPEAN PATENT APPLICATION

(11) **EP 3 136 259 A1**
(43) Date of publication of application: **01.03.2017**
(21) Application number: 14901360.9
(22) Date of filing: 01.09.2014
(51) Int. Cl.: G06F 17/30

(54) **DATA MANAGEMENT METHOD AND TERMINAL**

(71) Applicant: Huawei Technologies Co. Ltd., Shenzhen, Guangdong 518129 (CN)
(72) Inventor: HUANG, Xi, Shenzhen Guangdong 518129 (CN); WU, Huangwei, Shenzhen Guangdong 518129 (CN)
(74) Representative: Thun, Clemens
(86) International application number: PCT/CN2014/085687
(87) International publication number: WO 2016/033728

(57) **Abstract**

Embodiments of the present invention disclose a data management method and a terminal, where the method includes: storing a first event, where a status of the first event includes at least a first state and a second state; storing first data used for a first application, where the first data is associated with the first event; searching, after the status of the first event changes from the first state to the second state, for the first data associated with the first event; and managing the first data and/or the first application according to the status of the first event and the first data. The corresponding terminal is further disclosed. According to the embodiments of the present invention, data used for an application is associated with an event, and when a status of the event changes, corresponding management may be performed on the data and/or the application automatically and in a timely manner, which saves storage space, and avoids a trouble to a user caused by data and/or an application that are/is related to an outdated event.

## Description

### TECHNICAL FIELD

The present invention relates to the field of intelligent terminal technologies, and in particular, to a data management method and a terminal.

### BACKGROUND

An operating system of an intelligent terminal such as a mobile phone or a tablet computer provides a user with abundant application functions and experience, for example, contact management, event management, and a calendar. An event management application may conveniently help us manage a recent event, including setting reminders with various conditions, for example, a geo-fence and time. However, in the following scenarios, the event management application cannot well manage an event of the user and data associated with the event.

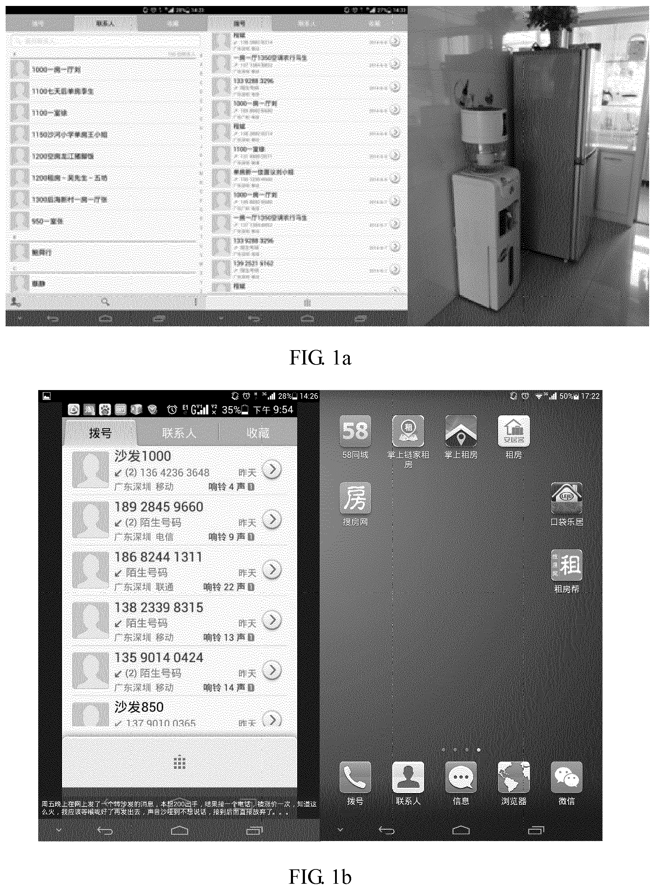

For example, as shown in FIG. 1a, a user is looking for a room recently. The user saves house owner information of some rooms that the user wants to see, contacts house owners to see the rooms, finally takes a fancy to a room, and rents the room already. However, a large quantity of unwanted contact information, call records, SMS messages, photographed photos, and the like are saved in a mobile phone.

For another example, as shown in FIG. 1b, a user is to move out and wants to transfer some old furniture and household appliances. The user receives calls of lots of persons after posting information, and saves some. After the furniture is transferred, contact information, call records, and the like are still stored in a mobile phone, and some associated applications are still installed in the mobile phone.

In the prior art, an event may be associated with a contact, for example, a meeting reminder that is set in outlook reminds all associated contacts before a meeting. However, after some events are completed, related information is no longer useful, but cannot be quickly and conveniently deleted, which not only wastes storage space of a terminal, but also affects a speed at which a user searches for information.

### SUMMARY

Embodiments of the present invention provide a data management method and a terminal, to manage automatically and in a timely manner, when a status of an event changes, data and/or an application that are/is associated with the event, so as to save storage space, and avoid a trouble to a user caused by data and/or an application that are/is related to an outdated event.

According to a first aspect, a data management method is provided, including:
storing a first event, where a status of the first event includes at least a first state and a second state;
storing first data used for a first application, where the first data is associated with the first event;
searching, after the status of the first event changes from the first state to the second state, for the first data associated with the first event; and
managing the first data and/or the first application according to the status of the first event and the first data.

In a first possible implementation manner, the first application is an address book, the first data is a contact and communication data associated with the contact, and the contact includes at least one piece of contact information; and
the searching, after the status of the first event changes from the first state to the second state, for the first data associated with the first event includes:
after the status of the first event changes from the first state to the second state, searching the address book for the contact, and searching, according to the at least one piece of contact information included in the contact, the address book for communication data associated with the at least one piece of contact information.

With reference to the first aspect, in a second possible implementation manner, the first application is an instant messaging application; the first data is a contact and communication data associated with the contact;
the searching, after the status of the first event changes from the first state to the second state, for the first data associated with the first event includes:
sending the contact to the first application, so that the first application searches for the communication data associated with the contact, performs a management operation on the communication data, and returns an operation result; and
the managing the first data and/or the first application according to the status of the first event and the first data includes:
   receiving the operation result returned by the first application.

With reference to the first aspect, the first possible implementation manner of the first aspect, or the second possible implementation manner of the first aspect, in a third possible implementation manner, the first event is a timing event, and
the searching, after the status of the first event changes from the first state to the second state, for the first data associated with the first event includes:
searching, when a time specified by the timing event arrives, for the first data associated with the timing event.

With reference to the first aspect, the first possible implementation manner of the first aspect, the second possible implementation manner of the first aspect, or the third possible implementation manner of the first aspect, in a fourth possible implementation manner, the first data is further associated with at least one second event, and the managing the first data and/or the first application according to the status of the first event and the first data includes:
modifying an association relationship between the first data and the first event when the status of the first event changes and a status of at least one event in the at least one second event is not the second state; or
managing the first data and/or the first application when both the status of the first event and a status of the at least one second event change to the second state.

With reference to the fourth possible implementation manner of the first aspect, in a fifth possible implementation manner, the managing the first data and/or the first application when both the status of the first event and a status of the at least one second event change to the second state includes:
deleting the first data when both the status of the first event and the status of the at least one second event change to the second state, where
the second state is a completed state.

With reference to the fourth possible implementation manner of the first aspect, in a sixth possible implementation manner, the managing the first data and/or the first application when both the status of the first event and a status of the at least one second event change to the second state includes:
when both the status of the first event and the status of the at least one second event change to the second state, uninstalling the first application and deleting the first data, where
the second state is a completed state, and the first data is an identifier of the first application.

With reference to the fourth possible implementation manner of the first aspect, in a seventh possible implementation manner, the managing the first data and/or the first application when both the status of the first event and a status of the at least one second event change to the second state includes:
hiding the first data and/or the first application when both the status of the first event and the status of the at least one second event change to the second state, where
the second state is a hidden state.

According to a second aspect, a terminal is provided, including:
a first storage unit, configured to store a first event, where a status of the first event includes at least a first state and a second state;
a second storage unit, configured to store first data used for a first application, where the first data is associated with the first event;
a search unit, configured to search, after the status of the first event changes from the first state to the second state, for the first data associated with the first event; and
a first management unit, configured to manage the first data and/or the first application according to the status of the first event and the first data.

In a first possible implementation manner, the first application is an address book, the first data is a contact and communication data associated with the contact, and the contact includes at least one piece of contact information; and
the search unit is specifically configured to:
after the status of the first event changes from the first state to the second state, search the address book for the contact, and search, according to the at least one piece of contact information included in the contact, the address book for communication data associated with the at least one piece of contact information.

With reference to the second aspect, in a second possible implementation manner, the first application is an instant messaging application; the first data is a contact and communication data associated with the contact;
the search unit is specifically configured to:
send the contact to the first application, so that the first application searches for the communication data associated with the contact, performs a management operation on the communication data, and returns an operation result; and
the first management unit is specifically configured to:
   receive the operation result returned by the first application.

With reference to the second aspect, the first possible implementation manner of the second aspect, or the second possible implementation manner of the second aspect, in a third possible implementation manner, the first event is a timing event, and
the search unit is specifically configured to:
search, when a time specified by the timing event arrives, for the first data associated with the timing event.

With reference to the second aspect, the first possible implementation manner of the second aspect, the second possible implementation manner of the second aspect, or the third possible implementation manner of the second aspect, in a fourth possible implementation manner, the first data is further associated with at least one second event, and the first management unit includes:
a modification unit, configured to modify an association relationship between the first data and the first event when the status of the first event changes and a status of at least one event in the at least one second event is not the second state; or
a second management unit, configured to manage the first data and/or the first application when both the status of the first event and a status of the at least one second event change to the second state.

With reference to the fourth possible implementation manner of the second aspect, in a fifth possible implementation manner, the second management unit is specifically configured to:
delete the first data when both the status of the first event and the status of the at least one second event change to the second state, where
the second state is a completed state.

With reference to the fourth possible implementation manner of the second aspect, in a sixth possible implementation manner, the second management unit is specifically configured to:
when both the status of the first event and the status of the at least one second event change to the second state, uninstall the first application and delete the first data, where
the second state is a completed state, and the first data is an identifier of the first application.

With reference to the fourth possible implementation manner of the second aspect, in a seventh possible implementation manner, the second management unit is specifically configured to:
hide the first data and/or the first application when both the status of the first event and the status of the at least one second event change to the second state, where
the second state is a hidden state.

According to a third aspect, a terminal is provided, including an input apparatus, an output apparatus, a memory, and a processor; where
the processor performs the following steps:
storing a first event, where a status of the first event includes at least a first state and a second state;
storing first data used for a first application, where the first data is associated with the first event;
searching, after the status of the first event changes from the first state to the second state, for the first data associated with the first event; and
managing the first data and/or the first application according to the status of the first event and the first data.

In a first possible implementation manner, the first application is an address book, the first data is a contact and communication data associated with the contact, and the contact includes at least one piece of contact information; and
that the processor performs the step of searching, after the status of the first event changes from the first state to the second state, for the first data associated with the first event includes:
after the status of the first event changes from the first state to the second state, searching the address book for the contact, and searching, according to the at least one piece of contact information included in the contact, the address book for communication data associated with the at least one piece of contact information.

With reference to the third aspect, in a second possible implementation manner, the first application is an instant messaging application; the first data is a contact and communication data associated with the contact;
that the processor performs the step of searching, after the status of the first event changes from the first state to the second state, for the first data associated with the first event includes:
sending the contact to the first application, so that the first application searches for the communication data associated with the contact, performs a management operation on the communication data, and returns an operation result; and
that the processor performs the step of managing the first data and/or the first application according to the status of the first event and the first data includes:
   receiving the operation result returned by the first application.

With reference to the third aspect, the first possible implementation manner of the third aspect, or the second possible implementation manner of the third aspect, in a third possible implementation manner, the first event is a timing event, and
that the processor performs the step of searching, after the status of the first event changes from the first state to the second state, for the first data associated with the first event includes:
searching, when a time specified by the timing event arrives, for the first data associated with the timing event.

With reference to the third aspect, the first possible implementation manner of the third aspect, the second possible implementation manner of the third aspect, or the third possible implementation manner of the third aspect, in a fourth possible implementation manner, the first data is further associated with at least one second event, and that the processor performs the step of managing the first data and/or the first application according to the status of the first event and the first data includes:
modifying an association relationship between the first data and the first event when the status of the first event changes and a status of at least one event in the at least one second event is not the second state; or
managing the first data and/or the first application when both the status of the first event and a status of the at least one second event change to the second state.

With reference to the fourth possible implementation manner of the third aspect, in a fifth possible implementation manner, that the processor performs the step of managing the first data and/or the first application when both the status of the first event and a status of the at least one second event change to the second state includes:
deleting the first data when both the status of the first event and the status of the at least one second event change to the second state, where
the second state is a completed state.

With reference to the fourth possible implementation manner of the third aspect, in a sixth possible implementation manner, that the processor performs the step of managing the first data and/or the first application when both the status of the first event and a status of the at least one second event change to the second state includes:
when both the status of the first event and the status of the at least one second event change to the second state, uninstalling the first application and deleting the first data, where
the second state is a completed state, and the first data is an identifier of the first application.

With reference to the fourth possible implementation manner of the third aspect, in a seventh possible implementation manner, that the processor performs the step of managing the first data and/or the first application when both the status of the first event and a status of the at least one second event change to the second state includes:
hiding the first data and/or the first application when both the status of the first event and the status of the at least one second event change to the second state, where
the second state is a hidden state.

According to the data management method and the terminal provided in the embodiments of the present invention, data used for an application is associated with an event, and when a status of the event changes, corresponding management may be performed on the data and/or the application automatically and in a timely manner, which saves storage space, and avoids a trouble to a user caused by data and/or an application that are/is related to an outdated event.

### BRIEF DESCRIPTION OF DRAWINGS

To describe the technical solutions in the embodiments of the present invention or in the prior art more clearly, the following briefly describes the accompanying drawings required for describing the embodiments. Apparently, the accompanying drawings in the following description show merely some embodiments of the present invention, and persons of ordinary skill in the art may still derive other drawings from these accompanying drawings without creative efforts.
FIG. 1a is an exemplary event management application in the prior art;
FIG. 1b is another exemplary event management application in the prior art;
FIG. 2 is a flowchart of a data management method according to an embodiment of the present invention;
FIG. 3 is a flowchart of another data management method according to an embodiment of the present invention;
FIG. 4 is a flowchart of a data management method according to an embodiment of the present invention;
FIG. 5 is a flowchart of still another data management method according to an embodiment of the present invention;
FIG. 6 is a schematic structural diagram of a terminal according to an embodiment of the present invention;
FIG. 7 is a schematic structural diagram of another terminal according to an embodiment of the present invention; and
FIG. 8 is a schematic structural diagram of still another terminal according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by persons of ordinary skill in the art based on the embodiments of the present invention without creative efforts shall fall within the protection scope of the present invention.

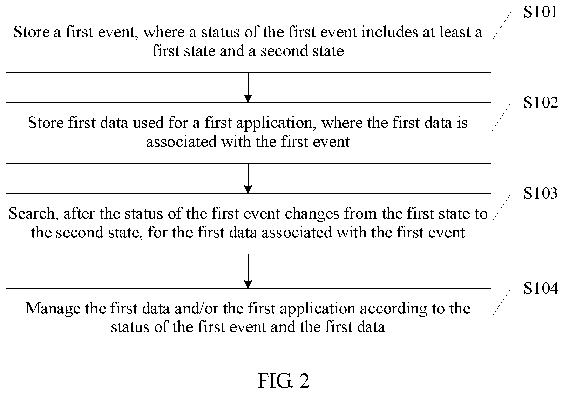

Referring to FIG. 2, FIG. 2 is a flowchart of a data management method according to an embodiment of the present invention, and the method includes the following steps:
Step S101: Store a first event, where a status of the first event includes at least a first state and a second state.

When using a terminal to complete some events, a user first creates an event and stores the event, for example, an event of looking for a room or an event of transferring furniture. In addition, with progress of the event, a status of the event changes, and the status of the event needs to be updated in a timely manner. For example, a status change process of the event is a created/stored state, an ongoing state, a hidden state, a completed state, and the like.

Step S102: Store first data used for a first application, where the first data is associated with the first event.

One or more applications may need to be used to complete one event, and one application not only may be used to complete one event, but may be used to complete one or more events. The application may be a system application such as an address book, an image library, or a video library, or may be a third party application program (Application, APP) such as an instant messaging application. Each application has some data to be applied to the application. These data may be generated when the application runs, may be originally included in the application, or may be imported from another location such as a terminal or a cloud, and these data is stored in the terminal. The terminal involved in this embodiment of the present invention may be an electronic apparatus in which an application can be installed and run, such as a mobile phone or a tablet computer.

Step S103: Search, after the status of the first event changes from the first state to the second state, for the first data associated with the first event.

When a status of an event changes, that is, an event changes from an ongoing state to a completed state, a hidden state, or the like, data associated with the event is searched for. Because an association relationship between the data and the event is established, the data associated with the event can be found according to the association relationship.

Step S104: Manage the first data and/or the first application according to the status of the first event and the first data.

If the status of the event changes, for example, is updated to the completed or the hidden state, a deleting or hiding operation is performed on the data, and an uninstalling or hiding operation is performed on the application. In this way, storage space of the terminal is saved, and a trouble to the user caused by an application and data that are related to an outdated event is also avoided.

It may be learned that according to the data management method provided in this embodiment of the present invention, data used for an application is associated with an event, and when a status of the event changes, corresponding management may be performed on the data and/or the application automatically and in a timely manner, which saves storage space, and avoids a trouble to a user caused by data and/or an application that are/is related to an outdated event.

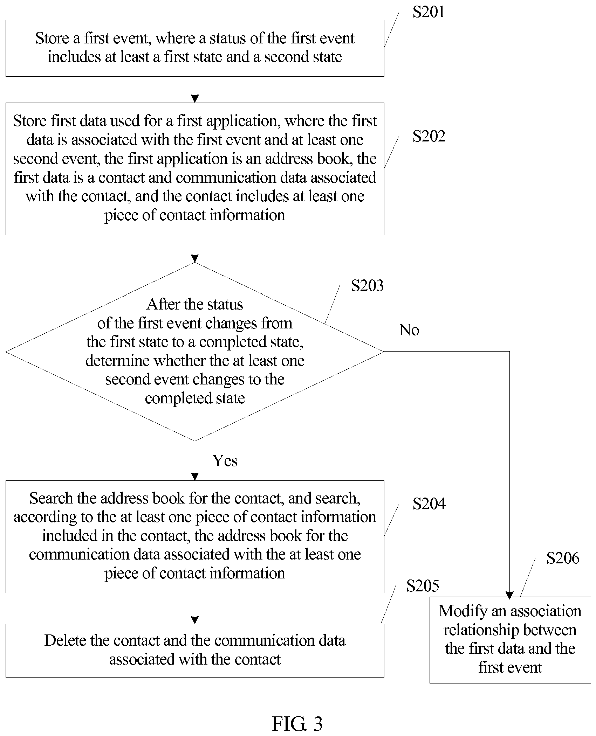

Referring to FIG. 3, FIG. 3 is a flowchart of another data management method according to an embodiment of the present invention, and the method includes the following steps:
Step S201: Store a first event, where a status of the first event includes at least a first state and a second state.

When using a terminal to complete some events, a user first creates an event and stores the event, for example, an event of looking for a room or an event of transferring furniture. In addition, with progress of the event, a status of the event changes, and the status of the event needs to be updated in a timely manner. For example, a status change process of the event is a created/stored state, an ongoing state, a hidden state, a completed state, and the like. An update to the status may be manually entered by the user, be input received by the terminal from another terminal, or may be another update manner.

Step S202: Store first data used for a first application, where the first data is associated with the first event and at least one second event, the first application is an address book, the first data is a contact and communication data associated with the contact, and the contact includes at least one piece of contact information.

The application in this embodiment of the present invention may be a system application, and an address book is specifically used as an example. For example, some house owners and intermediary agents need to be contacted to look for a room, and these contacts are set to be associated with the event of looking for a room. The contact may include some detailed information, for example, a mobile phone number of the contact and a mailbox of the contact. Some communication data may be generated when the user looks for the room according to the information about the contact, for example, a call record and an SMS message record of the mobile phone number of the contact, and an email record of the mailbox of the contact. These communication data is stored in the terminal of the user. However, these contacts may be further associated with another event. For example, these contacts are further associated with the event of transferring furniture.

The first event may be a timing event. When the contact is created, a scheduled time may be set, so that the contact and the communication data associated with the contact are deleted or hidden when the scheduled time arrives.

Step S203: After the status of the first event changes from the first state to a completed state, determine whether the at least one second event changes to the completed state. If yes, go to step S204; otherwise, go to step S206.

In this embodiment, for each contact, it is determined whether one or more events associated with the contact are all completed. For example, by using the event of looking for a room, a house owner 1 and a house owner 2 who are associated with the event are found. However, the house owner 1 not only may be associated with the event of looking for a room, but also may be associated with the event of transferring furniture. Therefore, when the event of looking for a room is completed, it further needs to be determined whether the event of transferring furniture is completed.

Herein, if the first event is the timing event, an event status change herein may be that a time specified by the timing event arrives.

Step S204: Search the address book for the contact, and search, according to the at least one piece of contact information included in the contact, the address book for communication data associated with the at least one piece of contact information.

When a status of an event changes to the completed state, data associated with the event is searched for. For example, when the foregoing event of looking for a room is completed, a contact associated with the event of looking for a room and communication data associated with the contact are searched for.

Step S205: Delete the contact and the communication data associated with the contact.

If all events associated with a contact are completed, a system application may be searched, according to detailed information included in the contact, for example, a mobile phone number of the contact and a mailbox of the contact, for communication data associated with the detailed information. Herein, the system application refers to an application that may be developed by a terminal operating system developer or an application developed by a terminal manufacturer.

Because all the events associated with the contact are completed, the contact and the communication data of the contact may be deleted, so as to save storage space of the terminal, and also avoid a trouble to the user caused by related data generated by an outdated event.

An implementation scenario in this embodiment is as follows: When the event of looking for a room is created, some contacts are also created gradually in the address book, for example, "1000, one bedroom and one living room, Liu" and "1100, seven days later, a single room, Mr. Li" shown in FIG. 1a, and some communication data is generated in a process of looking for a room, for example, a dialing record shown in FIG. 1a. When a room is found, a status attribute of the event of looking for a room is modified to completed. In this case, a system is triggered to search for the contact associated with the event of looking for a room, for example, finds "1000, one bedroom and one living room, Liu" and "1100, seven days later, a single room, Mr. Li" shown in FIG. 1a, and when confirming that all other events associated with the foregoing contacts are completed, automatically deletes these contacts and the communication data generated by the system. In this case, these dialing records, these SMS message records, and the like no longer exist in a communication record of the terminal, which enables the user to conveniently browse through another more important communication record. The contacts and the communication data of these outdated events no longer cause a trouble to the user, and do not need to be manually deleted by the user, which saves storage space.

Step S206: Modify an association relationship between the first data and the first event.

When not all statuses of events associated with the contact change, that is, some events are still not completed, the contact and the communication data cannot be deleted, uninstalled, or hidden, but only an association relationship between the contact and the event can be modified in this case. A deleting or hiding operation is not performed on the contact and the data until all the statuses of the events associated with the contact change to or are represented as the completed state, so as to avoid that a contact and data that are also associated with another event are deleted, uninstalled, or hidden by mistake because of completion of an event, which causes unavailability of the contact and the data.

It should be noted that in addition to an address book application, this embodiment may be further applied to another system application. When a status of an event changes, a system may directly find data associated with the event. For example, for an image library or a video library, an image or a video is set to be associated with an event, and the system may directly find, according to the association relationship, the image or the video that is associated with the event.

It may be learned that according to the data management method provided in this embodiment of the present invention, data used for an application is associated with an event, and when a status of the event changes, corresponding management may be performed on the data and/or the application automatically and in a timely manner, which saves storage space, avoids a trouble to a user caused by data and/or an application that are/is related to an outdated event, and in addition, avoids a misoperation that is performed, because an event is completed, on an application and data that are associated with multiple events.

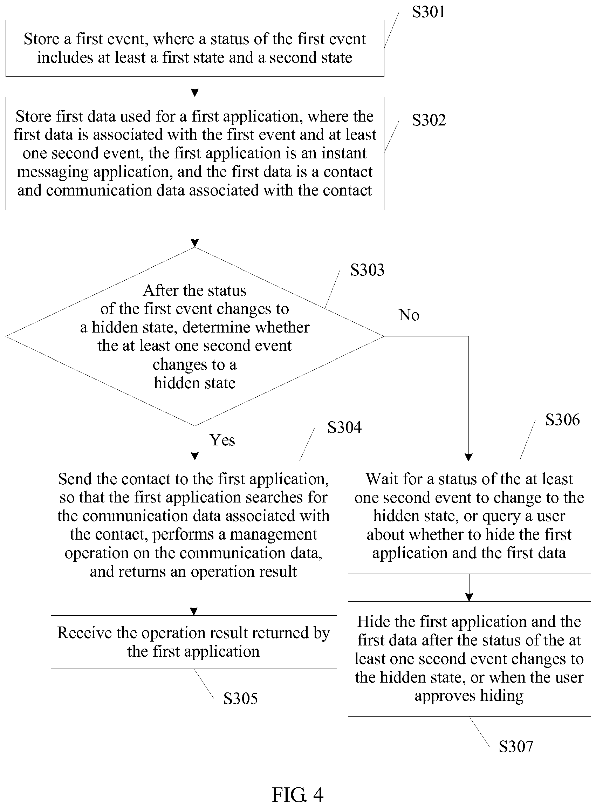

Referring to FIG. 4, FIG. 4 is a flowchart of a data management method according to an embodiment of the present invention, and the method includes the following steps:
Step S301: Store a first event, where a status of the first event includes at least a first state and a second state.
Step S301 is the same as step S101 or S201 in the foregoing embodiments, and details are not described herein again.
Step S302: Store first data used for a first application, where the first data is associated with the first event and at least one second event, the first application is an instant application, and the first data is a contact and communication data associated with the contact.

In this embodiment, the instant application is used as an example, for example, QQ or WeChat. In the instant application, a contact of the instant application is a friend added in the instant application, and the like, and communication data of the instant application is a chat record, a file transfer record, and the like that are generated with the contact.

The first event may be a timing event. When the contact is created, a scheduled time may be set, so that the contact and the communication data associated with the contact are deleted or hidden when the scheduled time arrives.

Step S303: After the status of the first event changes to a hidden state, determine whether the at least one second event changes to a hidden state. If yes, go to step S304; otherwise, go to step S306.

In this embodiment, when a status change of an event changes to the hidden state, data management is triggered. Setting the hidden state may be hiding, when some events have no progress temporarily or a user wants to suspend processing, these applications and data generated by the applications, and when the user restarts the event, these applications and the data generated by the applications may be displayed again, which may also avoid a trouble to the user caused by these applications and the data that the user wants to hide.

Herein, if the first event is the timing event, an event status change herein may be that a time specified by the timing event arrives.

Step S304: Send the contact to the first application, so that the first application searches for the communication data associated with the contact, performs a management operation on the communication data, and returns an operation result.

Step S305: Receive the operation result returned by the first application.

A difference from the foregoing embodiments lies in: If contact data is corresponding to a third party application, such as an instant application, a system sends the contact data to the corresponding third party application. The third party application searches the third party application for related information according to received contact information, performs a hiding operation, and feeds back an operation result to the system by using an interface of the system.

Step S306: Wait for a status of the at least one second event to change to the hidden state, or query a user about whether to hide the first application and the first data.

Step S307: Hide the first application and the first data after the status of the at least one second event changes to the hidden state, or when the user approves hiding.

When not all events associated with a piece of found contact data change to a hidden state, all the events may be awaited for changing to a hidden state, or the user is queried about whether to hide the contact application and the found data. The contact application and the found data are hidden after the statuses of all the events change to the hidden state, or when the user approves hiding.

It may be learned that according to the data management method provided in this embodiment of the present invention, a contact application is associated with an event, the contact application and communication data generated in running of the contact application are automatically hidden when a status change of the event changes to a hidden state, and the application and the data that are associated with the event may be managed in a timely manner, which saves storage space, and avoids a trouble to a user caused by data related to a hidden event.

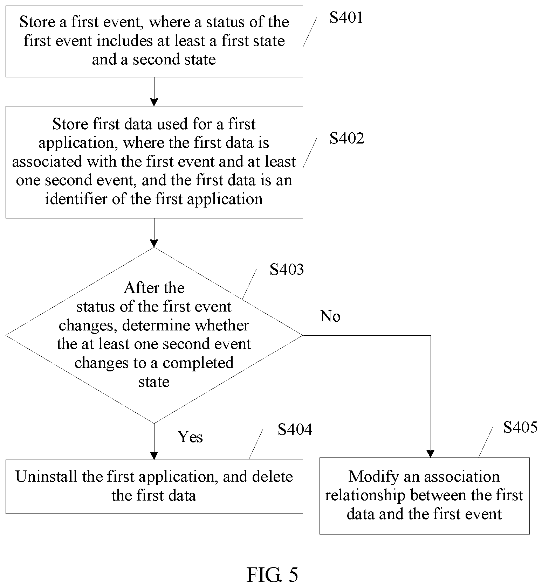

Referring to FIG. 5, FIG. 5 is a flowchart of still another data management method according to an embodiment of the present invention. The method includes the following steps:
Step S401: Store a first event, where a status of the first event includes at least a first state and a second state.
Step S401 is the same as step S101, S201, or S301 in the foregoing embodiments, and details are not described herein again.
Step S402: Store first data used for a first application, where the first data is associated with the first event and at least one second event, and the first data is an identifier of the first application.

The application in this embodiment refers to an APP. After an event is created/stored, some applications are installed. For example, an event of looking for a room is created, and 58.com is newly installed to look for a room. Each application has a unique application identifier, and the identifier of the first application is set to be associated with the event. In a process of running the application, some data is generated, for example, registry information, a downloaded cache file, an application update installation package file, and an application database.

The application identifier may be further associated with another event. For example, 58.com may be further used for an event such as taking a ride.

The first event may be a timing event. When the application is installed and runs, a scheduled time may be set, so that the application identifier and the data generated in the running of the application are deleted or hidden when the scheduled time arrives.

Step S403: After the status of the first event changes, determine whether the at least one second event changes to a completed state. If yes, go to step S404; otherwise, go to step S405.

When a status of an event changes, it needs to be determined whether events associated with the application identifier are all completed. Herein, the event may be further the timing event, and an event status change herein may be that a time specified by the timing event arrives. Step S404: Uninstall the first application, and delete the first data.

Step S405: Modify an association relationship between the first data and the first event.

When it is confirmed that the events associated with the application identifier are all completed, an uninstalling operation on the APP and a deleting operation on the data are performed. The deleting operation on the data includes deleting system registration information, deleting an application package, deleting an application update package, and an icon and a shortcut icon of the application on a home screen, deleting data saved in a manner such as generating or downloading in a process of using the application, and the like.

When a status change of the event changes to a hidden state, a hiding operation may also be performed on the application identifier and the data generated in the running of the application.

It may be learned that according to the data management method provided in this embodiment of the present invention, an identifier of an application is associated with an event, the application and data generated in running of the application are automatically deleted when the event is completed, and the application and the data that are associated with the event may be managed in a timely manner, which saves storage space, avoids a trouble to a user caused by data related to an outdated event, and in addition, avoids a misoperation that is performed, because an event is completed, on an application and data generated in running of the application that are associated with multiple events.

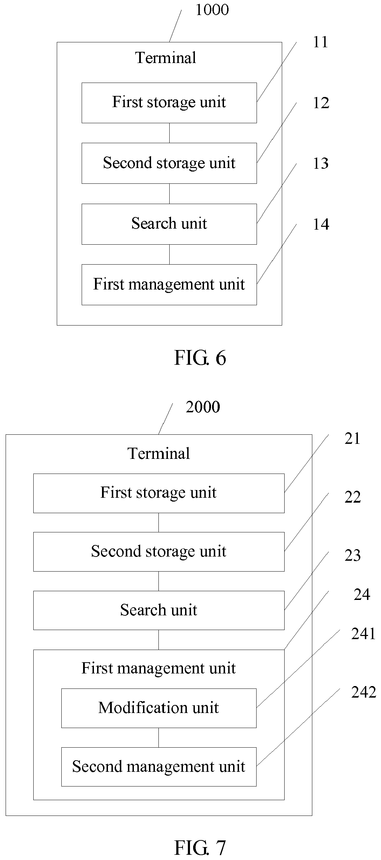

Referring to FIG. 6, FIG. 6 is a schematic structural diagram of a terminal according to an embodiment of the present invention. The terminal 1000 includes a first storage unit 11, a second storage unit 12, a search unit 13, and a first management unit 14.

The first storage unit 11 is configured to store a first event, where a status of the first event includes at least a first state and a second state.

When a user uses the terminal to complete some events, the first storage unit 11 first creates an event and stores the event, for example, an event of looking for a room or an event of transferring furniture. In addition, with progress of the event, a status of the event changes, and the status of the event needs to be updated in a timely manner. For example, a status change process of the event is a created/stored state, an ongoing state, a hidden state, a completed state, and the like.

The second storage unit 12 is configured to store first data used for a first application, where the first data is associated with the first event.

One or more applications may need to be used to complete one event, and one application not only may be used to complete one event, but may be used to complete one or more events. The application may be a system application such as an address book, an image library, or a video library, or may be a third party application program (Application, APP) such as an instant messaging application. Each application has some data to be applied to the application. These data may be generated when the application runs, may be originally included in the application, or may be imported from another location such as the terminal or a cloud, and the second storage unit 12 stores these data in the terminal. The terminal involved in this embodiment of the present invention may be an electronic apparatus in which an application can be installed and run, such as a mobile phone or a tablet computer.

The search unit 13 is configured to search, after the status of the first event changes from the first state to the second state, for the first data associated with the first event.

When a status of an event changes, that is, an event changes from an ongoing state to a completed state, a hidden state, or the like, the search unit 13 searches for data associated with the event. Because an association relationship between the data and the event is established, the data associated with the event can be found according to the association relationship.

The first management unit 14 is configured to manage the first data and/or the first application according to the status of the first event and the first data.

If the status of the event changes, for example, is updated to the completed or the hidden state, the first management unit 14 performs a deleting or hiding operation on the data, and performs an uninstalling or hiding operation on the application. In this way, storage space of the terminal is saved, and a trouble to the user caused by an application and data that are related to an outdated event is also avoided.

It may be learned that according to the terminal provided in this embodiment of the present invention, data used for an application is associated with an event, and when a status of the event changes, corresponding management may be performed on the data and/or the application automatically and in a timely manner, which saves storage space, and avoids a trouble to a user caused by data and/or an application that are/is related to an outdated event.

Referring to FIG. 7, FIG. 7 is a schematic structural diagram of another terminal according to an embodiment of the present invention. The terminal 2000 includes a first storage unit 21, a second storage unit 22, a search unit 23, and a first management unit 24.

The first storage unit 21 is configured to store a first event, where a status of the first event includes at least a first state and a second state.

When a user uses the terminal to complete some events, the first storage unit 21 first creates an event and stores the event, for example, an event of looking for a room or an event of transferring furniture. In addition, with progress of the event, a status of the event changes, and the status of the event needs to be updated in a timely manner. For example, a status change process of the event is a created/stored state, an ongoing state, a hidden state, a completed state, and the like. An update to the status may be manually entered by the user, be input received by the terminal from another terminal, or may be another update manner.

The second storage unit 22 is configured to store first data used for a first application, where the first data is associated with the first event and at least one second event, the first application is an address book, the first data is a contact and communication data associated with the contact, and the contact includes at least one piece of contact information.

The application in this embodiment of the present invention may be a system application, and an address book is specifically used as an example. For example, some house owners and intermediary agents need to be contacted to look for a room, and these contacts are set to be associated with the event of looking for a room. The contact may include some detailed information, for example, a mobile phone number of the contact and a mailbox of the contact. Some communication data may be generated when the user looks for the room according to the information about the contact, for example, a call record and an SMS message record of the mobile phone number of the contact, and an email record of the mailbox of the contact. The second storage unit 22 stores the contact and the communication data in the terminal of the user. However, these contacts may be further associated with another event. For example, these contacts are further associated with the event of transferring furniture.

The first event may be a timing event. When the contact is created, a scheduled time may be set, so that the contact and the communication data associated with the contact are deleted or hidden when the scheduled time arrives.

The search unit 23 is configured to search, after the status of the first event changes from the first state to the second state, for the first data associated with the first event.

The search unit 23 is specifically configured to: search the address book for the contact, and search, according to the at least one piece of contact information included in the contact, the address book for communication data associated with the at least one piece of contact information.

In this embodiment, for each contact, it is determined whether one or more events associated with the contact are all completed. For example, by using the event of looking for a room, a house owner 1 and a house owner 2 who are associated with the event are found. However, the house owner 1 not only may be associated with the event of looking for a room, but also may be associated with the event of transferring furniture. Therefore, when the event of looking for a room is completed, it further needs to be determined whether the event of transferring furniture is completed.

Herein, if the first event is a timing event, an event status change herein may be that a time specified by the timing event arrives. The search unit 23 is specifically configured to search, when a time specified by the timing event arrives, for the first data associated with the timing event.

When a status of an event changes to a completed state, data associated with the event is searched for. For example, when the foregoing event of looking for a room is completed, a contact associated with the event of looking for a room and communication data associated with the contact are searched for.

The first management unit 24 is configured to manage the first data and/or the first application according to the status of the first event and the first data.

In this embodiment, the first management unit 24 includes a modification unit 241 and a second management unit 242.

The modification unit 241 is configured to modify an association relationship between the first data and the first event when the status of the first event changes and a status of at least one event in the at least one second event is not the second state.

When not all statuses of events associated with the contact change, that is, some events are still not completed, the contact and the communication data cannot be deleted, uninstalled, or hidden, but only an association relationship between the contact and the event can be modified in this case. A deleting or hiding operation is not performed on the contact and the data until all the statuses of the events associated with the contact change to or are represented as the completed state, so as to avoid that a contact and data that are also associated with another event are deleted, uninstalled, or hidden by mistake because of completion of an event, which causes unavailability of the contact and the data.

The second management unit 242 is configured to: when both the status of the first event and a status of the at least one second event change to the second state, delete the contact and the communication data associated with the contact.

If all events associated with a contact are completed, a system application may be searched, according to detailed information included in the contact, for example, a mobile phone number of the contact and a mailbox of the contact, for communication data associated with the detailed information. Herein, the system application refers to an application that may be developed by a terminal operating system developer or an application developed by a terminal manufacturer.

Because all the events associated with the contact are completed, the contact and the communication data of the contact may be deleted, so as to save storage space of the terminal, and also avoid a trouble to the user caused by related data generated by an outdated event.

An implementation scenario in this embodiment is as follows: When the event of looking for a room is created, some contacts are also created gradually in the address book, for example, "1000, one bedroom and one living room, Liu" and "1100, seven days later, a single room, Mr. Li" shown in FIG. 1a, and some communication data is generated in a process of looking for a room, for example, a dialing record shown in FIG. 1a. When a room is found, a status attribute of the event of looking for a room is modified to completed. In this case, a system is triggered to search for the contact associated with the event of looking for a room, for example, finds "1000, one bedroom and one living room, Liu" and "1100, seven days later, a single room, Mr. Li" shown in FIG. 1a, and when confirming that other events associated with the foregoing contacts are all completed, automatically deletes these contacts and the communication data generated by the system. In this case, these dialing records, these SMS message records, and the like no longer exist in a communication record of the terminal, which enables the user to conveniently browse through another more important communication record. The contacts and the communication data of these outdated events no longer cause a trouble to the user, and do not need to be manually deleted by the user, which saves storage space.

It should be noted that in addition to an address book application, this embodiment may be further applied to another system application. When a status of an event changes, a system may directly find data associated with the event. For example, for an image library or a video library, an image or a video is set to be associated with an event, and the system may directly find, according to the association relationship, the image or the video that is associated with the event.

It may be learned that according to the terminal provided in this embodiment of the present invention, data used for an application is associated with an event, and when a status of the event changes, corresponding management may be performed on the data and/or the application automatically and in a timely manner, which saves storage space, avoids a trouble to a user caused by data and/or an application that are/is related to an outdated event, and in addition, avoids a misoperation that is performed, because an event is completed, on an application and data that are associated with multiple events.

Still referring to FIG. 7, an alternative embodiment of the terminal 2000 is described:

The first storage unit 21 is configured to store a first event, where a status of the first event includes at least a first state and a second state.

The first storage unit 21 is described in the foregoing embodiment, and details are not described herein again.

The second storage unit 22 is configured to store first data used for a first application, where the first data is associated with the first event and at least one second event, the first application is an instant application, and the first data is a contact and communication data associated with the contact.

In this embodiment, the instant application is used as an example, for example, QQ or WeChat. In the instant application, a contact of the instant application is a friend added in the instant application, and the like, and communication data of the instant application is a chat record, a file transfer record, and the like that are generated with the contact.

The first event may be a timing event. When the contact is created, a scheduled time may be set, so that the contact and the communication data associated with the contact are deleted or hidden when the scheduled time arrives. An event status change may be that a time specified by the timing event arrives.

The search unit 23 is further specifically configured to send the contact to the first application, so that the first application searches for the communication data associated with the contact, performs a management operation on the communication data, and returns an operation result.

In this embodiment, when a status change of an event changes to a hidden state, data management is triggered. Setting the hidden state may be hiding, when some events have no progress temporarily or a user wants to suspend processing, these applications and data generated by the applications, and when the user restarts the event, these applications and the data generated by the applications may be displayed again, which may also avoid a trouble to the user caused by these applications and the data that the user wants to hide.

A difference from the foregoing embodiments lies in: If contact data is corresponding to a third party application, such as an instant application, a system sends the contact data to the corresponding third party application. The third party application searches the third party application for related information according to received contact information, performs a hiding operation, and feeds back an operation result to the system by using an interface of the system.

When not all events associated with a piece of found contact data change to a hidden state, all the events may be awaited for changing to a hidden state, or the user is queried about whether to hide the contact application and the found data. The contact application and the found data are hidden after the statuses of all the events change to the hidden state, or when the user approves hiding.

The first management unit 24 is further specifically configured to receive the operation result returned by the first application.

It may be learned that according to the terminal provided in this embodiment of the present invention, a contact application is associated with an event, the contact application and communication data generated in running of the contact application are automatically hidden when a status change of the event changes to a hidden state, and the application and the data that are associated with the event may be managed in a timely manner, which saves storage space, and avoids a trouble to a user caused by data related to a hidden event.

Still referring to FIG. 7, another alternative embodiment of the terminal 2000 is described:

The first storage unit 21 is configured to store a first event, where a status of the first event includes at least a first state and a second state.

The first storage unit 21 is described in the foregoing embodiment, and details are not described herein again.

The second storage unit 22 is configured to store first data used for a first application, where the first data is associated with the first event and at least one second event, and the first data is an identifier of the first application.

The application in this embodiment refers to an APP. After an event is created/stored, some applications are installed. For example, an event of looking for a room is created, and 58.com is newly installed to look for a room. Each application has a unique application identifier, and the identifier of the first application is set to be associated with the event. In a process of running the application, some data is generated, for example, registry information, a downloaded cache file, an application update installation package file, and an application database.

The application identifier may be further associated with another event. For example, 58.com may be further used for an event such as taking a ride.

The first event may be a timing event. When the application is installed and runs, a scheduled time may be set, so that the application identifier and the data generated in the running of the application are deleted or hidden when the scheduled time arrives.

The search unit 23 is configured to search, after the status of the first event changes from the first state to the second state, for the first data associated with the first event.

The first management unit 24 is configured to manage the first data and/or the first application according to the status of the first event and the first data.

The first management unit 24 includes the modification unit 241 and the second management unit 242.

When a status of an event changes, it needs to be determined whether events associated with the application identifier are all completed. Herein, the event may be further a timing event, and an event status change herein may be that a time specified by the timing event arrives.

The modification unit 241 is configured to modify an association relationship between the first data and the first event when the status of the first event changes and a status of at least one event in the at least one second event is not the second state.

The second management unit 242 is configured to: when both the status of the first event and the status of the at least one second event change to the second state, uninstall the first application, and delete the first data.

When it is confirmed that the events associated with the application identifier are all completed, an uninstalling operation on the APP and a deleting operation on the data are performed. The deleting operation on the data includes deleting system registration information, deleting an application package, deleting an application update package, and an icon and a shortcut icon of the application on a home screen, deleting data saved in a manner such as generating or downloading in a process of using the application, and the like.

When a status change of the event changes to a hidden state, a hiding operation may also be performed on the application identifier and the data generated in the running of the application.

It may be learned that according to the terminal provided in this embodiment of the present invention, an identifier of an application is associated with an event, the application and data generated in running of the application are automatically deleted when the event is completed, and the application and the data that are associated with the event may be managed in a timely manner, which saves storage space, avoids a trouble to a user caused by data related to an outdated event, and in addition, avoids a misoperation that is performed, because an event is completed, on an application and data generated in running of the application that are associated with multiple events.

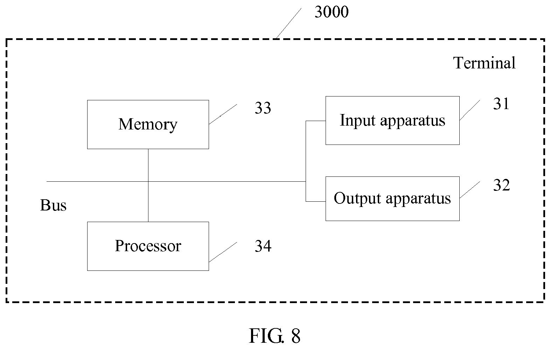

FIG. 8 is a schematic structural diagram of still another terminal according to an embodiment of the present invention. As shown in FIG. 8, the terminal 3000 may include:
an input apparatus 31, an output apparatus 32, a memory 33, and a processor 34 (a quantity of the processors 34 in the terminal may be one or more, and one processor is used as an example in FIG. 8). In some embodiments of the present invention, the input apparatus 31, the output apparatus 32, the memory 33, and the processor 34 may be connected to each other by using a bus or in another manner. That they are connected to each other by using a bus is used as an example in FIG. 8.

The processor 34 is configured to perform the following steps:
storing a first event, where a status of the first event includes at least a first state and a second state;
storing first data used for a first application, where the first data is associated with the first event;
searching, after the status of the first event changes from the first state to the second state, for the first data associated with the first event; and
managing the first data and/or the first application according to the status of the first event and the first data.

In an implementation manner, the first application is an address book, the first data is a contact and communication data associated with the contact, and the contact includes at least one piece of contact information; and
that the processor performs the step of searching, after the status of the first event changes from the first state to the second state, for the first data associated with the first event includes:
after the status of the first event changes from the first state to the second state, searching the address book for the contact, and searching, according to the at least one piece of contact information included in the contact, the address book for communication data associated with the at least one piece of contact information.

In another implementation manner, the first application is an instant messaging application; the first data is a contact and communication data associated with the contact;
that the processor performs the step of searching, after the status of the first event changes from the first state to the second state, for the first data associated with the first event includes:
sending the contact to the first application, so that the first application searches for the communication data associated with the contact, performs a management operation on the communication data, and returns an operation result; and
that the processor performs the step of managing the first data and/or the first application according to the status of the first event and the first data includes:
   receiving the operation result returned by the first application.

In still another implementation manner, the first event is a timing event; and
that the processor performs the step of searching, after the status of the first event changes from the first state to the second state, for the first data associated with the first event includes:
searching, when a time specified by the timing event arrives, for the first data associated with the timing event.

In still another implementation manner, the first data is further associated with at least one second event, and that the processor performs the step of managing the first data and/or the first application according to the status of the first event and the first data includes:
modifying an association relationship between the first data and the first event when the status of the first event changes and a status of at least one event in the at least one second event is not the second state; or
managing the first data and/or the first application when both the status of the first event and a status of the at least one second event change to the second state.

In still another implementation manner, that the processor performs the step of managing the first data and/or the first application when both the status of the first event and a status of the at least one second event change to the second state includes:
deleting the first data when both the status of the first event and the status of the at least one second event change to the second state, where
the second state is a completed state.

In still another implementation manner, that the processor performs the step of managing the first data and/or the first application when both the status of the first event and a status of the at least one second event change to the second state includes:
When both the status of the first event and the status of the at least one second event change to the second state, uninstalling the first application and deleting the first data, where
the second state is a completed state, and the first data is an identifier of the first application.

In still another implementation manner, that the processor performs the step of managing the first data and/or the first application when both the status of the first event and a status of the at least one second event change to the second state includes:
hiding the first data and/or the first application when both the status of the first event and the status of the at least one second event change to the second state, where
the second state is a hidden state.

According to the terminal provided in this embodiment of the present invention, data used for an application is associated with an event, and when a status of the event changes, corresponding management may be performed on the data and/or the application automatically and in a timely manner, which saves storage space, and avoids a trouble to a user caused by data and/or an application that are/is related to an outdated event.

It should be noted that, for brief description, the foregoing method embodiments are represented as a series of actions. However, persons skilled in the art should appreciate that the present invention is not limited to the described order of the actions, because according to the present invention, some steps may be performed in other orders or simultaneously. In addition, persons skilled in the art should also appreciate that all the embodiments described in the specification are exemplary embodiments, and the related actions and modules are not necessarily mandatory to the present invention.

In the foregoing embodiments, the description of each embodiment has respective focuses. For a part that is not described in detail in an embodiment, reference may be made to related descriptions in other embodiments.

With descriptions of the foregoing embodiments, persons skilled in the art may clearly understand that the present invention may be implemented by hardware, firmware or a combination thereof. When the present invention is implemented by software, the foregoing functions may be stored in a computer-readable medium or transmitted as one or more instructions or code in the computer-readable medium. The computer-readable medium includes a computer storage medium and a communications medium, where the communications medium includes any medium that enables a computer program to be transmitted from one place to another. The storage medium may be any available medium accessible to a computer. The following is used as an example but is not limited: The computer readable medium may include a random access memory (Random Access Memory, RAM), a read-only memory (Read-Only Memory, ROM), an electrically erasable programmable read-only memory (Electrically Erasable Programmable Read-Only Memory, EEPROM), a compact disc read-only memory (Compact Disc Read-Only Memory, CD-ROM) or other optical disk storage, a disk storage medium or other disk storage, or any other medium that can be used to carry or store expected program code in a command or data structure form and can be accessed by a computer. In addition, any connection may be appropriately defined as a computer-readable medium. For example, if software is transmitted from a website, a server or another remote source by using a coaxial cable, an optical fiber/cable, a twisted pair, a digital subscriber line (Digital Subscriber Line, DSL) or wireless technologies such as infrared ray, radio and microwave, the coaxial cable, optical fiber/cable, twisted pair, DSL or wireless technologies such as infrared ray, radio and microwave are included in fixation of a medium to which they belong. For example, a disk (Disk) and disc (disc) used by the present invention includes a compact disc (CD), a laser disc, an optical disc, a digital versatile disc (DVD), a floppy disk and a Blu-ray disc, where the disk generally copies data by a magnetic means, and the disc copies data optically by a laser means. The foregoing combination should also be included in the protection scope of the computer-readable medium.

In summary, what is described above is merely exemplary embodiments of the technical solutions of the present invention, but is not intended to limit the protection scope of the present invention. Any modification, equivalent replacement, or improvement made without departing from the spirit and principle of the present invention shall fall within the protection scope of the present invention.

## Claims

1. A data management method, comprising:
storing a first event, wherein a status of the first event comprises at least a first state and a second state;
storing first data used for a first application, wherein the first data is associated with the first event;
searching, after the status of the first event changes from the first state to the second state, for the first data associated with the first event; and
managing the first data and/or the first application according to the status of the first event and the first data.

2. The method according to claim 1, wherein the first application is an address book, the first data is a contact and communication data associated with the contact, and the contact comprises at least one piece of contact information; and
the searching, after the status of the first event changes from the first state to the second state, for the first data associated with the first event comprises:
after the status of the first event changes from the first state to the second state, searching the address book for the contact, and searching, according to the at least one piece of contact information comprised in the contact, the address book for communication data associated with the at least one piece of contact information.

3. The method according to claim 1, wherein the first application is an instant messaging application; the first data is a contact and communication data associated with the contact;
the searching, after the status of the first event changes from the first state to the second state, for the first data associated with the first event comprises:
sending the contact to the first application, so that the first application searches for the communication data associated with the contact, performs a management operation on the communication data, and returns an operation result; and
the managing the first data and/or the first application according to the status of the first event and the first data comprises:
receiving the operation result returned by the first application.

4. The method according to any one of claims 1 to 3, wherein the first event is a timing event, and
the searching, after the status of the first event changes from the first state to the second state, for the first data associated with the first event comprises:
searching, when a time specified by the timing event arrives, for the first data associated with the timing event.

5. The method according to any one of claims 1 to 4, wherein the first data is further associated with at least one second event, and the managing the first data and/or the first application according to the status of the first event and the first data comprises:
modifying an association relationship between the first data and the first event when the status of the first event changes and a status of at least one event in the at least one second event is not the second state; or
managing the first data and/or the first application when both the status of the first event and a status of the at least one second event change to the second state.

6. The method according to claim 5, wherein the managing the first data and/or the first application when both the status of the first event and a status of the at least one second event change to the second state comprises:
deleting the first data when both the status of the first event and the status of the at least one second event change to the second state, wherein
the second state is a completed state.

7. The method according to claim 5, wherein the managing the first data and/or the first application when both the status of the first event and a status of the at least one second event change to the second state comprises:
when both the status of the first event and the status of the at least one second event change to the second state, uninstalling the first application and deleting the first data, wherein
the second state is a completed state, and the first data is an identifier of the first application.

8. The method according to claim 5, wherein the managing the first data and/or the first application when both the status of the first event and a status of the at least one second event change to the second state comprises:
hiding the first data and/or the first application when both the status of the first event and the status of the at least one second event change to the second state, wherein
the second state is a hidden state.

9. A terminal, comprising:
a first storage unit, configured to store a first event, wherein a status of the first event comprises at least a first state and a second state;
a second storage unit, configured to store first data used for a first application, wherein the first data is associated with the first event;
a search unit, configured to search, after the status of the first event changes from the first state to the second state, for the first data associated with the first event; and
a first management unit, configured to manage the first data and/or the first application according to the status of the first event and the first data.

10. The terminal according to claim 9, wherein the first application is an address book, the first data is a contact and communication data associated with the contact, and the contact comprises at least one piece of contact information; and
the search unit is specifically configured to:
after the status of the first event changes from the first state to the second state, search the address book for the contact, and search, according to the at least one piece of contact information comprised in the contact, the address book for communication data associated with the at least one piece of contact information.

11. The terminal according to claim 9, wherein the first application is an instant messaging application; the first data is a contact and communication data associated with the contact;
the search unit is specifically configured to:
send the contact to the first application, so that the first application searches for the communication data associated with the contact, performs a management operation on the communication data, and returns an operation result; and
the first management unit is specifically configured to:
receive the operation result returned by the first application.

12. The terminal according to any one of claims 9 to 11, wherein the first event is a timing event, and
the searching unit is specifically configured to:
search, when a time specified by the timing event arrives, for the first data associated with the timing event.

13. The terminal according to any one of claims 9 to 12, wherein the first data is further associated with at least one second event, and the first management unit comprises:
a modification unit, configured to modify an association relationship between the first data and the first event when the status of the first event changes and a status of at least one event in the at least one second event is not the second state; or
a second management unit, configured to manage the first data and/or the first application when both the status of the first event and a status of the at least one second event change to the second state.

14. The terminal according to claim 13, wherein the second management unit is specifically configured to:
delete the first data when both the status of the first event and the status of the at least one second event change to the second state, wherein
the second state is a completed state.

15. The terminal according to claim 13, wherein the second management unit is specifically configured to:
when both the status of the first event and the status of the at least one second event change to the second state, uninstall the first application and delete the first data, wherein
the second state is a completed state, and the first data is an identifier of the first application.

16. The terminal according to claim 13, wherein the second management unit is specifically configured to:
hide the first data and/or the first application when both the status of the first event and the status of the at least one second event change to the second state, wherein
the second state is a hidden state.

17. A terminal, comprising an input apparatus, an output apparatus, a memory, and a processor; wherein
the processor performs the following steps:
storing a first event, wherein a status of the first event comprises at least a first state and a second state;
storing first data used for a first application, wherein the first data is associated with the first event;
searching, after the status of the first event changes from the first state to the second state, for the first data associated with the first event; and
managing the first data and/or the first application according to the status of the first event and the first data.

18. The terminal according to claim 17, wherein the first application is an address book, the first data is a contact and communication data associated with the contact, and the contact comprises at least one piece of contact information; and
that the processor performs the step of searching, after the status of the first event changes from the first state to the second state, for the first data associated with the first event comprises:
after the status of the first event changes from the first state to the second state, searching the address book for the contact, and searching, according to the at least one piece of contact information comprised in the contact, the address book for communication data associated with the at least one piece of contact information.

19. The terminal according to claim 17, wherein the first application is an instant messaging application; the first data is a contact and communication data associated with the contact;
that the processor performs the step of searching, after the status of the first event changes from the first state to the second state, for the first data associated with the first event comprises:
sending the contact to the first application, so that the first application searches for the communication data associated with the contact, performs a management operation on the communication data, and returns an operation result; and
that the processor performs the step of managing the first data and/or the first application according to the status of the first event and the first data comprises:
receiving the operation result returned by the first application.

20. The terminal according to any one of claims 17 to 19, wherein the first event is a timing event, and
that the processor performs the step of searching, after the status of the first event changes from the first state to the second state, for the first data associated with the first event comprises:
searching, when a time specified by the timing event arrives, for the first data associated with the timing event.

21. The terminal according to any one of claims 17 to 20, wherein the first data is further associated with at least one second event, and that the processor performs the step of managing the first data and/or the first application according to the status of the first event and the first data comprises:
modifying an association relationship between the first data and the first event when the status of the first event changes and a status of at least one event in the at least one second event is not the second state; or
managing the first data and/or the first application when both the status of the first event and a status of the at least one second event change to the second state.

22. The terminal according to claim 21, wherein that the processor performs the step of managing the first data and/or the first application when both the status of the first event and a status of the at least one second event change to the second state comprises:
deleting the first data when both the status of the first event and the status of the at least one second event change to the second state, wherein
the second state is a completed state.

23. The terminal according to claim 21, wherein that the processor performs the step of managing the first data and/or the first application when both the status of the first event and a status of the at least one second event change to the second state comprises:
when both the status of the first event and the status of the at least one second event change to the second state, uninstalling the first application and deleting the first data, wherein
the second state is a completed state, and the first data is an identifier of the first application.

24. The terminal according to claim 21, wherein that the processor performs the step of managing the first data and/or the first application when both the status of the first event and a status of the at least one second event change to the second state comprises:
hiding the first data and/or the first application when both the status of the first event and the status of the at least one second event change to the second state, wherein
the second state is a hidden state.
